Europäisches Patentamt

(19) European Patent Office

Office européen des brevets

(11) Numéro de publication: **0 167 413**
**A1**

## (12) DEMANDE DE BREVET EUROPEEN

(21) Numéro de dépôt: 85400040.3

(22) Date de dépôt: 10.01.85

(51) Int. Cl.⁴: **C 09 J 3/14**
C 08 L 27/06, C 08 L 63/00

(30) Priorité: 18.01.84 FR 8400751

(43) Date de publication de la demande:
08.01.86 Bulletin 86/2

(84) Etats contractants désignés:
AT BE CH DE GB IT LI LU NL SE

(71) Demandeur: SOCIETE DES MATERIAUX D'ETANCHEITE POUR LES ENTREPRISES "MEPLE"
1 rue du Pilier
F-93300 Aubervilliers(FR)

(72) Inventeur: Croyere, Ghislain
7, Rue Bory d'Arnex
F-92210 St. Cloud(FR)

(74) Mandataire: Combe, André et al,
CABINET BEAU DE LOMENIE 55 rue d'Amsterdam
F-75008 Paris(FR)

(54) Matériaux composites incluant du bitume et une structure de fibres de verre, assemblée au moyen d'une colle spéciale.

(57) La présente invention a pour objet des matériaux composites comportant une structure à base de fibres de verre, enduite sur au moins l'une de ses faces d'une couche de bitume pur on mélangé. Ladite structure est obtenue par cuisson, pendant quelques minutes, à une température comprise entre 170°C et 230°C, d'un assemblage à base de fibres de verre, collé au moyen d'une colle contenant :
– 10 à 50 % d'une résine époxyde spéciale,
– 20 à 80 % de polychlorure de vinyle en poudre,
– 1 à 6 % d'un catalyseur de réticulation "des ponts époxydiques"
– 0 à 30 % d'un plastifiant du P.V.C.,
les pourcentages étant exprimés en poids.

Fig. 1

EP 0 167 413 A1

Matériaux composites, utilisables notamment dans le domaine de l'étanchéité, comportant une structure à base de fibres de verre, assemblée au moyen d'une colle spéciale, enduite sur au moins une de ses faces d'une couche de bitume pur ou mélangé.

La présente invention concerne des matériaux composites comportant une structure à base de fibres de verre, assemblée au moyen d'une colle spéciale, enduite sur au moins une de ses faces d'une couche de bitume pur ou mélangé.

Lesdits matériaux sont notamment avantageusement utilisés dans le domaine de l'étanchéité.

On connaît des matériaux composites constitués par une armature en fibre que l'on enduit d'une ou deux couches de bitume pur ou mélangé. L'armature en fibres peut être à base de fibres organiques et dans ce cas, on rencontre certaines difficultés du fait de la dilatation de ces fibres lors des variations de température, ou peut être à base de fibres de verre auquel cas la résistance au poinçonnement des matériaux composites obtenus est très faible.

Dans la mise au point des matériaux composites selon la présente invention, on a visé :

   - d'une part, à conférer à la feuille composite une résistance mécanique élevée à la traction, au poinçonnement et au choc ;

   - d'autre part, à limiter les dilatations de cette feuille, dilatations conséquentes dues à la nature des matériaux entrant dans sa composition, afin d'éviter les efforts de traction dans le revêtement par temps froid ;

   - et, enfin, à conserver certaines propriétés d'élasticité nécessaires pour que les mouvements auxquels est soumise la feuille ne causent de rupture ni dans les parties courantes ni au joint entre les feuilles.

Or, ces exigences sont souvent contradictoires. Ainsi, si l'on recherche une armature élastique, on est dans l'état actuel de la technique, obligé de choisir des fibres organiques, qui présentent un coefficient de dilatation aussi élevé que celui de la feuille. De telles feuilles ainsi armées seront trop sensibles aux variations de température. Si l'on envisage alors l'emploi de fibres minérales, fibres de verre par exemple, l'élasticité est faible et l'on observe, de plus, que le produit fini, à base de fibres de verre, tissées ou non tissées, résiste mal à la perforation par poinçonnement.

Le matériau composite selon l'invention comporte une structure à base de fibres de verre, enduite sur au moins l'une de ses faces d'une couche de bitume pur ou mélangé, caractérisé en ce que ladite structure est obtenue par cuisson, pendant quelques minutes à une température comprise entre 170 et 230°C, d'un assemblage à base de fibres de verre, collé au moyen d'une colle contenant :
- 10 à 50 % d'une résine époxyde spéciale,
- 20 à 80 % de polychlorure de vinyle en poudre,
- 1 à 6 % d'un catalyseur de réticulation "des ponts époxydiques",
- 0 à 30 % d'un plastifiant du P.V.C., ·
les pourcentages s'entendant en poids.

L'armature du matériau composite selon l'invention, de par sa structure, pallie à l'incompatibilité de performance −eu égard à l'élasticité, au coefficient de dilatation et à la résistance au poinçonnement− des systèmes d'armatures de feuilles déformables connus.

Ladite armature est à base de fibres de verre, ce qui élimine les problèmes de dilatation et son encollage avec la colle spéciale lui confère une résistance élevée au poinçonnement tout en lui conservant une certaine élasticité.

Ainsi, l'association de ladite armature avec au moins une couche de bitume pur ou mélangé confère-t-elle au matériau composite selon l'invention ainsi réalisé les propriétés recherchées (résistance mécanique élevée, dilatation limitée, certaine élasticité), et donc un intérêt certain.

Ledit matériau composite comporte une structure à base de fibres de verre. L'homme de l'art connaît les nombreuses structures qu'il est possible d'obtenir par collage de fils ou fibres de verre.

Les propriétés des matériaux ainsi obtenus sont étroitement dépendantes de la nature de la colle utilisée lors de l'assemblage.

La colle pour fibres de verre, utilisée pour l'élaboration de matériaux composites selon l'invention, est une colle spéciale, à soumettre à un traitement thermique,comme indiqué ci-après.

Elle est à base d'une résine époxyde spéciale et de polychlorure de vinyle. Elle contient en outre un catalyseur réticulant et un plastifiant du polyvinyle.

La résine époxyde spéciale est caractérisée en ce qu'elle a un poids moléculaire égal ou inférieur à 1000, un indice hydroxyle inférieur à 0,2 et un poids équivalent d'estérification de 100 à 150 (nombre de grammes de résine pour estérifier 1 mol/gr d'acide).

Le polychlorure de vinyle utilisé, l'est sous forme de poudre.

Le catalyseur réticulant choisi, agit par ouverture des ponts époxydes. Il peut s'agir d'un isocyanate ou préférentiellement du dicyane diamide.

Le plastifiant du polychlorure de vinyle sera non réticulant. Il peut s'agir du phtalate de dioctyl.

Ces quatre constituants de la colle spéciale utilisée pour l'élaboration des matériaux composites selon l'invention entrent dans sa composition, comme cela a été indiqué plus haut, selon les pourcentages en poids suivants :

|  |  |
|---|---|
| - résine époxyde spéciale | 10 à 50 % |
| - P.V.C. en poudre | 20 à 80 % |
| - catalyseur de réticulation | 1 à 6 % |
| - plastifiant du P.V.C. | 0 à 30 % |

Le plastifiant du P.V.C. intervient de préférence dans un pourcentage de 5 à 30 %

Ladite colle peut en outre contenir divers additifs que l'homme de métier emploie normalement dans les formulations de colle : des charges, stabilisants ou analogues.

A l'aide de cette colle, on élabore de nombreuses structures à base de fils ou fibres de verre. On assemble ces fils ou fibres de manière à constituer des faisceaux qu'il est possible d'arranger par collage selon divers motifs : on obtient ainsi des grilles, des _tissus_, ... Une grille sera par exemple le résultat d'un entrecroisement de fibres, qui se coupent à angle droit pour constituer un quadrillage plus ou moins parfait. Le quadrillage peut être de différents grammages. Les fibres sont collées à leur point de croisement. Le quadrillage ainsi obtenu peut être utilisé tel quel dans la fabrication de certains matériaux composites selon l'invention, après "cuisson" de l'encollage, ce que nous développerons un peu plus loin. Il peut également être collé sur ou sous un tissu mince non tissé, en fibres organiques (tergal, nylon, polyester) ou de préférence en fibres de verre. Une telle opération conforte la structure de la grille, lui assure une meilleure stabilité, notamment une plus forte résistance mécanique et favorise la formation ultérieure de matériaux composites.

L'homme de l'art conçoit qu'il s'agit d'une des multiples structures qu'il est possible de réaliser à partir de faisceaux de fibres de verre et d'une colle.

Les opérations de collage s'effectuent à froid par dépôt de la colle sur les fibres de verre suivant la technique bien connue de l'encollage. Ladite colle peut aussi être utilisée sur un tissu, peu ou pas encollé, au moment de la fabrication d'une feuille.

Après l'encollage, la colle doit toujours être cuite entre 170 et 230°C pendant quelques minutes. Cette "cuisson" peut s'opérer soit au tissage par étuvage soit au moment de l'enduction dans la mesure où le produit est déposé à chaud à une température entre 170 et 200°C.

Cette "cuisson" consiste essentiellement à réaliser, en un ou deux stades les deux opérations suivantes : la plastification ou gélification -connue- du P.V.C. par le plastifiant présent dans le mélange colle et la réticulation -par action du catalyseur sur la résine époxyde- de la résine époxyde.

Les grilles ou tissus à base de fibres de verre obtenues par une telle opération de collage au moyen de la colle spéciale, telle que définie ci-dessus possèdent des propriétés remarquables qui sont notamment mises en évidence lorsque lesdites structures interviennent dans la fabrication des matériaux composites selon l'invention.

Lesdits matériaux composites sont obtenus par enduction de ladite structure à base de fibres de verre sur au moins une de ses faces d'une couche de bitume pur ou mélangé. On emploiera notamment des bitumes modifiés par des charges minérales ou par des polymères.

Les matériaux composites selon l'invention sont avantageusement utilisés, comme indiqué, dans le domaine de l'étanchéité, par exemple pour le revêtement de toitures, parkings, terrasses, notamment pour des revêtements sous dalles sur plots...

L'élaboration de l'armature à base de fibres de verre, son utilisation pour la fabrication des matériaux composites selon l'invention, seront mieux comprises à la lecture des exemples de réalisation qui vont suivre et en se référant aux dessins annexés.

La figure 1 représente en perspective un exemple de réalisation d'une armature à base de fibres de verre, assemblées au moyen de la colle spéciale.

La figure 2 représente un matériau composite selon l'invention.

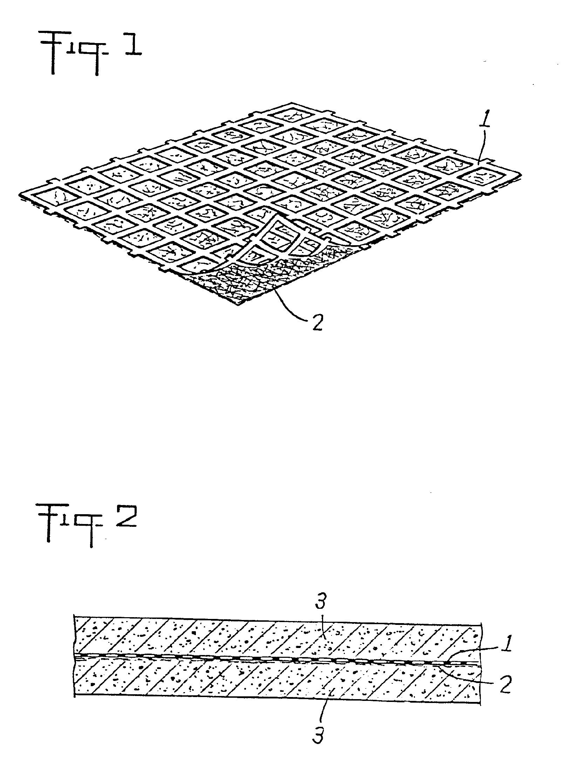

L'armature selon la figure 1 est réalisée à partir d'une grille de fibres de verre (1), déposée sur un voile de verre (2).

Une telle armature est utilisée pour la réalisation d'un matériau composite selon l'invention, entre deux couches de bitume (3), ce qui est représenté sur la figure 2.

EXEMPLE 1 :

Une armature telle que représentée sur la figure 1 est réalisée de la façon suivante :

L'encollage est réalisé par léchage, à froid, d'une grille de fils de verre (1) de 272 tex.

La colle utilisée a la composition suivante :
- résine époxyde spéciale        37 %
- P.V.C. en poudre               35 %
- dicyane diamide                 4 %
- phtalate de dioctyl            24 %

La grille encollée est ensuite étuvée à 190°C pendant une minute.

Elle est alors déposée sur un voile de verre (2) de 50 gr par m² puis collée à celui-ci.

L'armature ainsi réalisée résiste à l'essai de poinçonnement, à un poids de 25 kg pendant 24 heures (bille de 1 cm de diamètre).

Elle est utilisée pour la fabrication de matériaux composites selon l'invention.

EXEMPLE 2 :

On a préparé une colle spéciale pour la réalisation de matériaux composites selon l'invention, en mélangeant les ingrédients ci-après dans les proportions suivantes :

| | |
|---|---|
| - résine époxyde spéciale | 20 % |
| - P.V.C. en poudre | 62 % |
| - dicyane diamide | 1,8 % |
| - phtalate de dioctyl | 8 % |
| - diluant (white spirit) | 8,2 % |

A l'aide de cette colle, on réalise des structures à base de fibres de verre, à enrober de bitume.

7 0167413

## REVENDICATIONS

1.     Matériau composite comportant une structure à base de fibres de verre, enduite sur au moins l'une de ses faces d'une couche de bitume pur ou mélangé, caractérisé en ce que ladite structure est obtenue par cuisson, pendant quelques minutes, à une température comprise entre 170 et 230°C, d'un assemblage à base de fibres de verre, collé au moyen d'une colle contenant :
- 10 à 50 % d'une résine époxyde spéciale,
- 20 à 80 % de polychlorure de vinyle en poudre,
- 1 à 6 % d'un catalyseur de réticulation "des ponts époxydiques",
- 0 à 30 % d'un plastifiant du P.V.C.,
les pourcentages étant exprimés en poids.

2.     Matériau composite selon la revendication 1, caractérisé en ce que la colle employée contient en outre des additifs.

3.     Matériau composite selon l'une des revendications 1 ou 2, caractérisé en ce que la cuisson de la structure à base de fibres de verre s'opère au moment de l'enduction à chaud du bitume.

4.     Matériau composite selon l'une quelconque des revendications 1 à 3, caractérisé en ce que la structure à base de fibres de verre, consiste en une grille de fibres de verre, collée sur un tissu mince non tissé de fibres de verre.

Fig 1

Fig 2

Office européen
des brevets

**RAPPORT DE RECHERCHE EUROPEENNE**

Numero de la demande

EP 85 40 0040

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| X | FR-A-1 550 474 (GOODRICH)<br>* Résumé; exemples * | 1-4 | C 09 J  3/14<br>C 08 L 27/06<br>C 08 L 63/00 |
| | ----- | | |

DOMAINES TECHNIQUES
RECHERCHES (Int. Cl.4)

C 09 J
C 08 L

Le présent rapport de recherche a été établi pour toutes les revendications

| Lieu de la recherche | Date d'achèvement de la recherche | Examinateur |
|---|---|---|
| LA HAYE | 24-05-1985 | FOUQUIER J.P. |